(19) Europäisches Patentamt
European Patent Office
Office européen des brevets

(11) **EP 2 460 057 B1**

(12) **FASCICULE DE BREVET EUROPEEN**

(45) Date de publication et mention
de la délivrance du brevet:
**18.11.2020 Bulletin 2020/47**

(21) Numéro de dépôt: **10739563.4**

(22) Date de dépôt: **27.07.2010**

(51) Int Cl.:
***G05B 19/042*** *(2006.01)*

(86) Numéro de dépôt international:
**PCT/EP2010/060864**

(87) Numéro de publication internationale:
**WO 2011/012607 (03.02.2011 Gazette 2011/05)**

(54) **GESTION DE L'ENERGIE DANS UN BATIMENT**

ENERGIEVERWALTUNG IN EINEM GEBÄUDE

ENERGY MANAGEMENT IN A BUILDING

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **30.07.2009 FR 0955332**

(43) Date de publication de la demande:
**06.06.2012 Bulletin 2012/23**

(73) Titulaire: **Commissariat à l'Énergie Atomique
et aux Énergies Alternatives
75015 Paris (FR)**

(72) Inventeur: **HA, Duy Long
F-38320 Eybens (FR)**

(74) Mandataire: **Novaimo
Europa 1
362, avenue Marie Curie
Archamps Technopole
74166 Saint Julien-en-Genevois Cedex (FR)**

(56) Documents cités:
**EP-A1- 1 770 454      EP-A1- 1 770 454
EP-A2- 1 967 923      DE-A1-102004 055 273
US-A- 5 761 083       US-A1- 2006 020 353
US-B1- 6 754 504**

**Description**

L'invention concerne un procédé de gestion de l'énergie d'un bâtiment et un dispositif de gestion de l'énergie d'un bâtiment mettant en œuvre un tel procédé. Enfin, elle concerne un bâtiment en tant que tel mettant en œuvre une gestion de son énergie selon un tel procédé.

Le secteur du bâtiment représente une part très importante de l'énergie globale consommée et dans un souci de bonne gestion de l'énergie, il est donc très important d'optimiser la consommation au niveau des bâtiments. A titre d'exemple, le secteur du bâtiment représente 40% de l'énergie globale consommée en France. Les logements d'habitation représentent environ les deux tiers de la consommation énergétique du bâtiment. De plus, 70% de cette énergie est consommée par les systèmes de chauffage et de climatisation.

La consommation électrique dans les bâtiments présente une nature irrégulière qui présente des pics qui risquent de dépasser des seuils inacceptables par les systèmes de production d'électricité, ou simplement dépasser la limite prévue contractuellement pour un certain bâtiment. Pour pallier à de telles situations extrêmes, une solution connue consiste à prévoir des délestages automatiques de certaines consommations électriques, en coupant momentanément l'alimentation de certains dispositifs comme le système de chauffage ou un chauffe-eau. Cette solution reste toutefois basique et non optimale. Elle ne tient pas compte du confort des habitants et n'anticipe pas la survenue de tels pics.

Pour tenir compte du confort des habitants, une solution courante repose sur la mise en place d'un thermostat qui permet de saisir des températures de consigne différentes pour différentes périodes de temps.

Ces saisies sont réalisées par les habitants eux-mêmes et sont souvent non optimisées, car ne tiennent pas bien compte de l'inertie des bâtiments, ni des problématiques de pics de demande. De plus, elles ne réalisent en général pas une synthèse optimisée du confort souhaité par plusieurs occupants, qui peuvent avoir des attentes différentes.

Ainsi, une solution plus évoluée est décrite dans le document US2008/0177423, qui consiste à mettre en place un système intelligent de gestion de l'énergie au sein d'un bâtiment, à partir de réseaux de neurones et d'intelligence artificielle. Un tel système fonctionne en permanence pour accumuler un historique de mesures et d'observations lui permettant d'adapter intelligemment le comportement énergétique du bâtiment. Notamment, le chauffage du bâtiment peut ainsi s'adapter aux habitudes des habitants, optimiser leur confort, tout en recherchant la réduction globale de l'énergie consommée par la suppression des consommations inutiles. Cette solution évite aussi les pics de consommation selon des règles complexes et tournantes de délestage. Une telle solution présente l'inconvénient d'être lourde à mettre en place car elle nécessite un dispositif comprenant un calculateur puissant, fonctionnant en permanence, qui consomme lui-même une quantité d'énergie importante : ainsi, cette solution n'est pas adaptée aux bâtiments de taille réduite dont la consommation globale reste relativement faible. Le document US 6 754 504 B1 propose aussi une solution équivalente.

Outre la problématique capitale de la gestion des systèmes de chauffage et/ou de climatisation au sein des bâtiments, il faut aussi prendre en compte les coûts différents des différentes sources d'énergie électrique, solaire ou non par exemple, et la consommation électrique globale incluant tous les équipements consommateurs du bâtiment.

Ainsi, pour atteindre le confort optimal des occupants d'un bâtiment tout en réduisant la consommation globale d'énergie et gérant les pics de consommation, il existe un besoin d'un procédé de gestion de l'énergie simple et optimisé.

Un objet général de l'invention est donc de proposer une solution de gestion simple et optimisée de l'énergie au niveau d'un bâtiment, prenant en compte le confort des occupants.

A cet effet, l'invention repose sur un procédé de gestion de l'énergie d'un bâtiment selon la revendication 1.

L'invention est définie par les revendications.

Ces objets, caractéristiques et avantages de la présente invention seront exposés en détail dans la description suivante de modes d'exécution particuliers faits à titre non-limitatif en relation avec les figures jointes parmi lesquelles :

La figure 1 représente schématiquement le procédé de gestion de l'énergie d'un bâtiment selon un mode d'exécution de l'invention.

La figure 2 illustre la modélisation thermique mise en œuvre pour chaque zone d'un bâtiment selon le mode d'exécution de l'invention.

La figure 3 représente le résultat obtenu selon un exemple de mise en œuvre du procédé de gestion de l'énergie d'un bâtiment selon le mode d'exécution de l'invention.

La figure 4 représente un premier mode d'exécution d'un dispositif pour la mise en œuvre du procédé de gestion de l'énergie d'un bâtiment selon l'invention.

La figure 5 représente un second mode d'exécution d'un dispositif pour la mise en œuvre du procédé de gestion de l'énergie d'un bâtiment selon l'invention.

La figure 6 représente une variante des modes d'exécution de dispositifs pour la mise en œuvre du procédé de gestion de l'énergie d'un bâtiment selon l'invention.

L'invention repose sur le concept de tenir compte automatiquement de l'occupation globale du bâtiment, par exemple à partir de l'agenda électronique des occupants potentiels.

La réalisation avantageuse décrite ci-après utilise le produit du paramètre d'occupation globale par celui de confort thermique pour obtenir une optimisation du confort des occupants du bâtiment tout en minimisant l'énergie consommée, en tenant compte de l'occupation du bâtiment. Elle tient compte des bilans d'énergie produite et consommée globalement et anticipe ces comportements énergétiques par des calculs prévisionnels optimisés. Enfin, elle permet de minimiser l'impact environnemental.

Selon le mode d'exécution avantageux de l'invention, le procédé de gestion de l'énergie au sein d'un bâtiment donné va d'abord définir un découpage dans l'espace en I zones du bâtiment, chaque zone pouvant correspondre à une pièce donnée par exemple. Ensuite, le procédé qui repose sur une anticipation des phénomènes futurs repose sur un second découpage temporel en périodes du futur considéré. Chaque période représentera avantageusement une situation particulière et stable de l'utilisation du bâtiment, comme une certaine occupation. L'anticipation future peut avantageusement s'étendre sur les deux ou trois prochains jours.

Pour la description suivante de l'invention, nous considérerons que chaque jour est découpé en K périodes. Le choix du double découpage dans l'espace et dans le temps, soit du nombre de zones I et de périodes K, mis en œuvre par le procédé de gestion d'énergie d'un bâtiment, correspond à un compromis optimal entre la précision des calculs, qui exige un découpage en un grand nombres de zones et instants, et la complexité et la lourdeur du calcul résultant qui est d'autant plus simple que le découpage comprend peu de zones et instants.

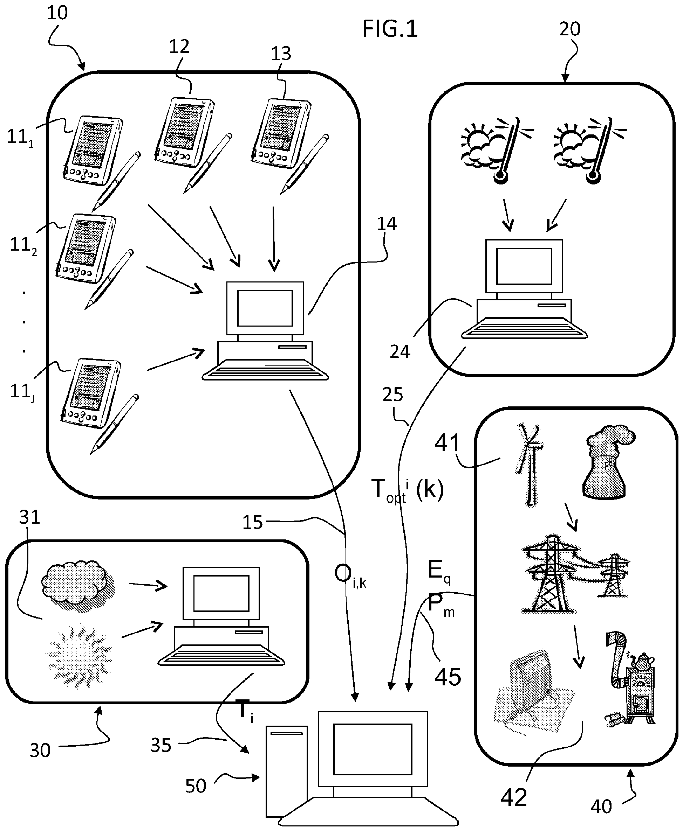

Le procédé de gestion de l'énergie d'un bâtiment va maintenant être explicité, selon un découpage en blocs, pour faciliter sa description de manière schématique, tel que représenté sur la figure 1. Les différents blocs de ce procédé peuvent être mis en œuvre totalement ou partiellement par un même ordinateur. Un dispositif pour la mise en œuvre du procédé sera détaillé par la suite.

Le procédé comprend un premier bloc 10 de calcul d'un paramètre d'occupation global de chaque zone i du bâtiment pour chaque période k envisagée. Le bloc 10 comprend en entrée les données des différents agendas électroniques 11j des J différents occupants possibles du bâtiment. Il comprend aussi les agendas électroniques 12 de certains groupes d'occupants, et les agendas 13 de certaines zones du bâtiment. En effet, chaque individu possède son agenda personnel, mais un groupe d'individus, comme un certain département d'une entreprise, peut aussi avoir un agenda du groupe considéré dans son ensemble, prévoyant des réunions de tout ou partie des membres du groupe. De plus, certaines pièces du bâtiment peuvent aussi posséder un agenda, comme les salles de réunion qui doivent être réservées à l'avance. Le bloc 10 d'occupation du bâtiment compile ou fusionne ces différentes données dans un bloc de calcul 14 pour en déduire en sortie 15 un paramètre $O_{i,k}$ d'occupation global d'une zone i pour une période k.

Les données d'entrée des agendas 11j, 12, 13 peuvent provenir d'un agenda électronique quelconque, par exemple tels que ceux utilisés sur des ordinateurs individuels par l'intermédiaire de logiciels comme PIM ou outlook ou sur un agenda électronique portable. Ces données peuvent être transmises au bloc de fusion 14 par tout moyen de communication, par exemple par l'intermédiaire d'une liaison Internet ou un Intranet. Le calculateur 14 peut être un ordinateur ou un serveur central.

Chaque donnée des agendas électroniques représente finalement une information sur la présence ou non d'un individu j dans une zone i pour une période k, soit un paramètre d'occupation individuel $o_{i,j,k}$.

Il sera convenu de fixer les valeurs suivantes pour ce paramètre binaire : $o_{i,j,k} = 1$ si l'individu j est présent dans la zone i à la période k et 0 sinon.

Le moyen de fusion 14 de ces données met alors en œuvre le calcul suivant, pour définir le paramètre d'occupation global $O_{i,k}$ défini ci-dessus.

$$O_{i,k} = 0 \text{ si } \sum_{j=1}^{J} o_{i,j,k=0}$$

Ou

$$O_{i,k} = 1 \text{ si } \sum_{j=1}^{J} o_{i,j,k>0}$$

Ainsi, le paramètre d'occupation $O_{i,k}$ prend une valeur égale à 1 s'il y a au moins une personne dans la zone i pendant la période k et 0 s'il n'y a personne.

Le procédé de gestion comprend de plus un bloc 20 de calcul de données de confort recherché. Pour cela, chaque individu j définit une température ambiante maximale $T_{max}^j$ (k) souhaitée, une température ambiante minimale $T_{min}^j$ (k) souhaitée et une température ambiante idéale $T_{opt}^j$ (k) souhaitée pour chaque période k. Le bloc 20 compile ces différentes données de tous les individus présents dans une même zone i en même temps pour obtenir une seule valeur commune de confort thermique par zone i et par période k. Pour cela, le bloc 20 comprend un bloc de calcul 24 qui effectue les calculs suivants, pour en déduire une température ambiante maximale moyenne $T_{max}^i$ (k) souhaitée, une température ambiante minimale moyenne $T_{min}^i$ (k) souhaitée et une température ambiante idéale moyenne $T_{opt}^i$ (k) souhaitée pour chaque zone i et pour chaque période k :

$$T_{max}^i (k) = \frac{\sum_{j=1}^{J} T_{max}^j (k) * o_{i,j,k}}{\sum_{j=1}^{J} o_{i,j,k}}$$

$$T_{min}^i (k) = \frac{\sum_{j=1}^{J} T_{min}^j (k) * o_{i,j,k}}{\sum_{j=1}^{J} o_{i,j,k}}$$

$$T_{opt}^i (k) = \frac{\sum_{j=1}^{J} T_{opt}^j (k) * o_{i,j,k}}{\sum_{j=1}^{J} o_{i,j,k}}$$

tout en respectant la relation :

$$T_{min}^i (k) \leq T_{opt}^i (k) \leq T_{max}^i (k)$$

Ces formules consistent à réaliser la moyenne des températures souhaitées par les différents individus présents dans une zone i à un instant k. Les données obtenues sont transmises en sortie 25 du bloc 20.

Dans un cas où le procédé ne dispose pas de valeur renseignée par les individus, des valeurs par défaut peuvent être prédéfinies et utilisées, sur la base par exemple de la norme de confort thermique ISO7730.

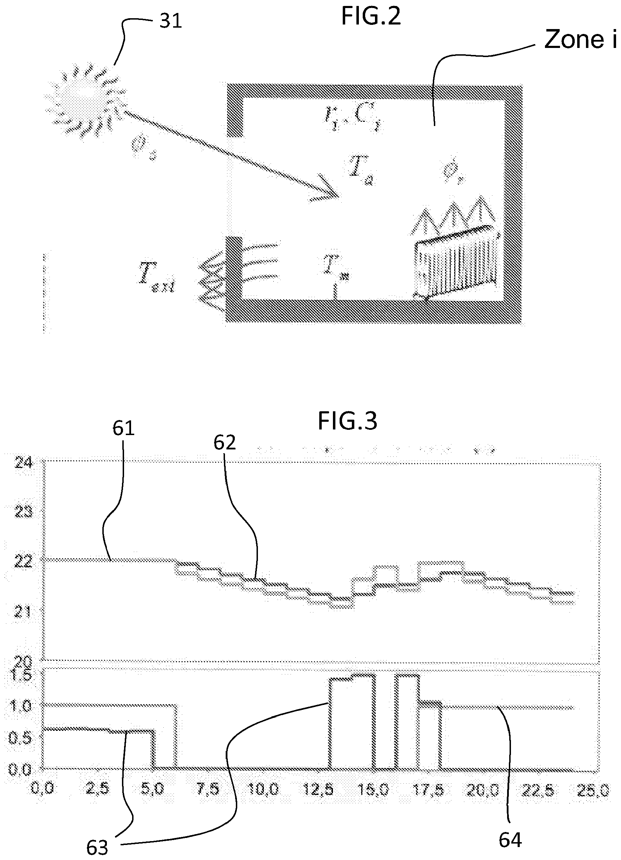

Le procédé utilise ensuite un troisième bloc 30 de calcul des températures dans chaque zone i pour chaque période k. Ce calcul repose sur un modèle de comportement thermique de chaque zone du bâtiment, représentée schématiquement sur la figure 2. Avantageusement, un modèle de deuxième ordre permet d'obtenir la température de l'air Ta (i, k) et la température de l'enveloppe du bâtiment $T_m$ (i, k) de la zone i pour la période k. Ce modèle tient compte en entrée de prévisions météorologiques 31, qui permettent de renseigner la température extérieure Text (k) pour la période k ainsi que le radiant solaire $\Phi s$ (k) affectant la zone i pour la période k. Les données météorologiques peuvent être produites localement ou obtenues à distance via Internet ou tout réseau de communication. Le modèle prend compte de constantes physiques, dont ri représentant la résistance thermique de volume de l'air, rm représentant la résistance thermique de l'enveloppe du bâtiment, Ci représentant la capacité thermique de volume de l'air et Cm représentant la capacité thermique de l'enveloppe du bâtiment. Enfin, il prend en compte le chauffage ou refroidissement P intervenant à l'intérieur de la zone i lors de la période k. Le modèle utilisé peut s'exprimer par l'équation suivante :

$$\begin{bmatrix} \frac{dTm}{dt} \\ \frac{dTa}{dt} \end{bmatrix} = \begin{bmatrix} \frac{-1}{ri\ Cm} & \frac{1}{ri\ Cm} \\ \frac{1}{ri\ Ci} & \frac{-1}{ra\ Ci} - \frac{1}{ri\ Ci} \end{bmatrix} \begin{bmatrix} Tm \\ Ti \end{bmatrix} + \begin{bmatrix} 0 & 0 & 0 \\ \frac{1}{ra\ Ci} & \frac{1}{Ci} & \frac{W}{Ci} \end{bmatrix} \begin{bmatrix} Text) \\ P \\ \Phi s \end{bmatrix}$$

Cette équation peut donner plus simplement l'équation suivante, après discrétisation :

$$T_i (k+1) = A\ T_i (k) + B\ P_m(k) + C1\ Text (k) + C2\ \Phi s (k)$$

Où A, B, C1, et C2 sont des matrices caractérisant le comportement thermique du bâtiment, $T_i$ (k) est la température de la zone i pour la période k, et $P_m$ (k) représente l'énergie injectée par un équipement m dans la période k.

Ce modèle permet de calculer la température prévisionnelle de chaque zone i à chaque période k à partir de la connaissance de la température initiale et des données météorologiques. Cette valeur est transmise en sortie 35 du bloc 30. En variante, tout autre modèle de calcul thermique pourrait être utilisé.

Le procédé doit déterminer le chauffage ou le refroidissement nécessaire dans chaque zone i et à chaque instant k pour atteindre les critères de confort déterminés au bloc 20 défini précédemment, en déterminant pour chaque zone i et chaque période k la consigne de température optimale, de sorte d'atteindre un confort optimal pour une consommation énergétique minimale, tout en respectant les contraintes de capacités des sources d'énergie.

Le procédé de gestion comprend un quatrième bloc 40 qui comprend en entrée les données 41 des Q sources d'énergie $E_q$ possibles, liées au bâtiment :

$E_q$ (k) : représente l'énergie produite par une source q pendant la période k ;
$E_q^{max}$ (k) : représente l'énergie maximale que peut produire une source q pendant la période k ;
$Cost_q$ (k) : représente le coût d'une unité d'énergie produite par la source q dans la période k ;
$CO_{2q}$ (k) : représente la quantité de $CO_2$ rejetée par une unité d'énergie produite par la source q dans la période k.

Pour chaque source d'énergie, le procédé prend donc en compte tout ou partie des données suivantes :

- la capacité de production maximale dans une période k ;
- le coût d'un pic de consommation du bâtiment ;
- la quantité de rejet en $CO_2$ d'une unité d'énergie produite ;
- le coût de production d'une unité d'énergie.

Par exemple, pour une unité de production photovoltaïque, la capacité de production dépend de l'ensoleillement et peut être estimée de manière anticipée, à partir des prévisions météorologiques. Si le bâtiment est simplement relié au réseau électrique national, le tarif horaire peut être variable, comprendre des heures creuses et pleines, ce qui définit le coût pour chaque période k considérée.

Le bâtiment peut exploiter les Q sources d'énergie disponibles pour le fonctionnement de M équipements 42 présents dans le bâtiment, caractérisés par les données suivantes :

$P_m$ (k) : représente l'énergie injectée par l'équipement m dans la période k ;
$P_m^{max}$ (k) : représente l'énergie maximale injectée par l'équipement m dans la période k.

Les différentes valeurs considérées par ce bloc 40 sont transmises en sortie 45.

Les valeurs prises en compte dans les blocs précédents sont finalement exploitées dans un cinquième bloc 50 qui détermine les différentes consignes de température pour chaque zone i et pour les futures périodes k et les énergies à injecter dans le bâtiment pour atteindre ces consignes, de la manière la plus optimisée possible, pour chaque zone et chaque période.

En préalable, le bloc 50 définit la variable Si (k) définissant la sensation thermique dans une zone i pendant une période k, c'est-à-dire une variable représentant le confort thermique, par les formules suivantes :

$$S_i\,(k) = \frac{T_{opt}^i\,(k) - Ti\,(k)}{T_{opt}^i\,(k) - T_{min}^i\,(k)} \qquad si\ T_i\,(k) \le T_{opt}^i\,(k)$$

Ou

$$S_i\,(k) = \frac{-T_{opt}^i\,(k) + Ti\,(k)}{-T_{opt}^i\,(k) + T_{max}^i\,(k)} \qquad si\ T_i\,(k) > T_{opt}^i\,(k)$$

Ces équations peuvent s'écrire par les formulations linéaires suivantes :

$$S_i\,(k) = a_2\,T_i\,(k) + b_2 \qquad si\ T_i\,(k) \le T_{opt}^i\,(k)$$

ou

$$S_i(k) = a_1 T_i(k) + b_1 \qquad \text{si } T_i(k) > T_{opt}^{\ i}(k)$$

En utilisant une variable binaire $\delta_i(k)$ qui prend la valeur égale à 1 si $T_i(k) \leq T_{opt}^{\ i}(k)$ et la valeur égale à 0 si $T_i(k) > T_{opt}^{\ i}(k)$, ce qu'on peut aussi écrire sous la forme suivante :

$$T_i(k) - T_{opt}^{\ i}(k) \leq (T_{max}^{\ i}(k) - T_{opt}^{\ i}(k)) \times (1- \delta_i(k))$$

$$\text{Et } T_i(k) - T_{opt}^{\ i}(k) \geq \varepsilon - (-T_{min}^{\ i}(k) + T_{opt}^{\ i}(k) + \varepsilon) \times \delta_i(k)$$

alors les deux équations précédentes peuvent s'écrire plus simplement par :

$$S_i(k) = [1- \delta_i(k)] [a_1 T_i(k) + b_1] + \delta_i(k) [a_2 T_i(k) + b_2]$$

Ensuite, le bloc 50 recherche à atteindre la condition suivante: Minimiser la somme suivante :

$$\sum_{i=1}^{I} \sum_{k=1}^{K} S_i(k)\, O_{i,k} \qquad (1)$$

Tout en respectant les équations suivantes (2) et (3) explicitées précédemment :

$$T_i(k+1) = A\, T_i(k) + B\, P_m(k) + C1\, Text(k) + C2\, \Phi s(k) \qquad (2)$$

$$S_i(k) = [1- \delta_i(k)] [a_1 T_i(k) + b_1] + \delta_i(k) [a_2 T_i(k) + b_2] \qquad (3)$$

La condition (1) permet d'obtenir le confort optimal par zone et par période, en combinant les paramètres d'occupation global $O_{i,k}$ et ceux de sensation thermique ou de confort thermique $S_i(k)$, sur la base de leur simple produit dans ce mode de réalisation. Cela permet de ne prendre en compte que le confort pour les zones occupées, à partir des souhaits des seuls occupants présents.

Outre l'approche thermique précédente, le bloc 50 cherche aussi à minimiser le coût de l'énergie nécessaire pour atteindre le confort optimal recherché. Cela se traduit par la recherche des valeurs de production d'énergie $E_q(k)$ et de consommation d'énergie $P_m(k)$ par les opérations suivantes :

Minimiser :

$$\sum_{q=1}^{Q} \sum_{k=1}^{K} Cost_q(k)\, E_q(k) \qquad (4)$$

$$\text{avec } \sum_{m=1}^{M} P_m(k) = \sum_{q=1}^{Q} E_q(k) \qquad (5)$$

$$\text{et avec } P_m(k) \leq P_m^{\ max}(k)\ \forall\, m \in [1, M],\ k \in [1, K] \qquad (6)$$

$$\text{et } E_q(k) \leq E_q^{\ max}(k)\ \forall\, q \in [1, Q],\ k \in [1, K] \qquad (7)$$

La condition (4) permet de minimiser le coût de l'ensemble des sources d'énergie utilisées par le bâtiment. L'équation (5) représente l'équilibre énergétique de l'ensemble du système, pour lequel l'énergie consommée au sein du bâtiment correspond à l'énergie produite en vue de sa consommation dans le bâtiment. Les deux dernières conditions (6), (7), traduisent des limites en énergie disponible, du fait des limites intrinsèques aux dispositifs concernés.

Enfin, le bloc 50 peut tenir compte d'autres conditions comme une ou plusieurs conditions environnementales. Notamment, il peut minimiser le rejet du $CO_2$ dans l'atmosphère, soit minimiser le rejet en $CO_2$ induit par la production d'énergie $E_q$, ce qui se traduit par la condition (8) suivante :

Minimiser la somme :

$$\sum_{q=1}^{Q} \sum_{k=1}^{K} CO_{2q}(k) E_q(k) \qquad (8)$$

Le bloc 50 comprend donc un calculateur, qui peut avantageusement comprendre un programme d'ordinateur, pour trouver la solution respectant les conditions et équations précédentes. Pour cela, la méthode de Branch &Bound peut être appliquée.

A titre d'exemple, considérons un bâtiment d'une seule zone dont on veut planifier l'énergie sur une durée de 24 heures, en considérant un temps d'échantillonnage d'une heure.

Le modèle thermique de ce bâtiment est connu et s'écrit par l'équation suivante :

$$\begin{bmatrix} T_1(k+1) \\ T_m(k+1) \end{bmatrix} = \begin{bmatrix} 0.299 & 0.686 \\ 0.203 & 0.794 \end{bmatrix} \begin{bmatrix} T_1(k) \\ T_m(k) \end{bmatrix} + \begin{bmatrix} 0.44 \\ 0.116 \end{bmatrix} P_m(k) + \begin{bmatrix} 0.015 \\ 0.004 \end{bmatrix} T_{ext}(k) + \begin{bmatrix} 0.44 \\ 0.116 \end{bmatrix} \Phi_s(k)$$

L'unique zone du bâtiment est supposée occupée de 18H à 6H. Ainsi, le paramètre d'occupation global s'exprime par le paramètre suivant :

$O_{1,k}$ = [1, 1, 1, 1, 1, 1, 1, 1, 0, 0, 0, 0, 0, 0, 0, 0, 0, 1, 1, 1, 1, 1, 1]

Le critère de sensation thermique est défini par :

$T_{min}$ = 18 °C ; $T_{opt}$ = 22 °C ; $T_{max}$ = 26 °C

La variable de sensation thermique s'écrit :

$$S1(k) = \begin{cases} \frac{-1}{4} T_1(k) + \frac{11}{2} & \text{si } T_1(k) \leq 22 \\ \frac{1}{4} T_1(k) + \frac{11}{2} & \text{si } T_1(k) > 22 \end{cases}$$

Le bâtiment considéré est relié au réseau électrique dont le coût de production varie en fonction de l'horaire creuse ou pleine. La puissance maximale de la source d'énergie est de 2 kW.

Nous avons :

$$\text{Cost}(k) = \begin{cases} 0.1106 \text{ si } k \in [1,2] \cup [7,11] \cup [15, 24] \\ 0.0673 \text{ si } k \in [3,6] \cup [12,14] \end{cases}$$

Le mode d'exécution de l'invention recherche les valeurs de $T_1(k)$ et $P_1(k)$ pour tout k, de sorte de minimiser :

le critère de confort $\sum_{k=1}^{24} S_1(k) \, O_{1,k}$

et le critère du coût énergétique $\sum_{k=1}^{24} \text{Cost}(k) \, E(k)$

La figure 3 illustre le résultat obtenu pour cet exemple, dont une première courbe 61 illustre la variation de la température de consigne en fonction du temps, une seconde courbe 62 la variation de la température à l'intérieur du bâtiment. Ces températures sont associées à une courbe 64 représentant l'occupation du bâtiment, et à une courbe 63 représentant la consommation en énergie du bâtiment. On note que le chauffage consomme de l'énergie pendant une période creuse, avant l'occupation du bâtiment, ce qui permet d'obtenir la température de confort au moment de l'occupation combinée avec une dépense d'énergie minimisée. Cet exemple volontairement simple illustre le résultat optimisé obtenu par l'invention, qui peut être reproduit sur des grands bâtiments, comprenant un nombre important de zones et d'occupants potentiels.

Le mode d'exécution décrit précédemment de gestion de l'énergie de l'habitat a surtout détaillé la gestion du chauffage et de la climatisation, en vue d'obtenir un confort thermique souhaité, principalement par la gestion de la température intérieure dans chaque zone du bâtiment, puisque comme cela a été explicité en préambule, les systèmes de chauffage et de climatisation représentent une part majeure de l'énergie globale consommée. Toutefois, le procédé de gestion de l'énergie tel que décrit précédemment est adapté pour prendre en compte tout dispositif consommant de l'énergie au sein d'un bâtiment.

Par exemple, le procédé gère aussi la lumière et détermine quelles sources de lumière doivent être allumées et à quelles heures dans le bâtiment pour atteindre un compromis optimal entre le souhait de lumière global des occupants, à partir de leurs souhaits individuels, en tenant compte des données météorologiques et de la lumière extérieure. Le procédé décrit précédemment s'applique donc aussi de manière similaire pour la gestion de l'éclairage au sein du bâtiment. De même, plus généralement, le procédé de gestion de l'énergie peut être appliqué à l'optimisation de la consommation énergétique globale du bâtiment, en prenant en compte tous les dispositifs consommateurs d'énergie, tous les souhaits associés des occupants pour en déduire une valeur de confort globale, toutes les conditions extérieures...

De plus, le procédé précédent a été explicité à titre d'exemple et peut être mis en œuvre avec de multiples variantes.

Par exemple, le bloc 10 de détermination du paramètre d'occupation global du bâtiment peut utiliser en entrée un agenda électronique, un agenda de congé à partir d'une autre source indépendante de gestion des congés, via un Intranet, ou obtenir les données de présence à partir d'un ou plusieurs capteur(s) de présence.

La gestion globale d'énergie du bâtiment a été décrite sur la base de trois critères principaux : le confort des occupants, le coût ou la performance énergétique, et le critère écologique avec la minimisation du $CO_2$ rejeté. Un quatrième critère d'autonomie du bâtiment en cas de coupure du réseau électrique peut être envisagé.

Toutefois, il faut bien noter que l'invention ne se limite pas à la recherche obligatoire de tous les critères mentionnés ci-dessus. Elle permet déjà d'atteindre des effets très avantageux sur la base d'un seul de ces critères, notamment le confort des occupants. Ensuite, toutes combinaisons de ces différents critères avec le critère de confort des occupants peuvent être envisagées, représentant diverses variantes du procédé de gestion de l'énergie.

Le procédé de gestion de l'énergie d'un bâtiment décrit ci-dessus peut être mis en œuvre avec différents dispositifs.

Toutefois, une exécution avantageuse repose sur l'utilisation d'un dispositif intelligent 70, remplissant une fonction intermédiaire de gestion des différents systèmes énergétiques comme le chauffage et la climatisation, en mettant en œuvre tout ou partie du procédé décrit précédemment, généralement de manière combinée avec au moins un ordinateur qui exécute les calculs les plus complexes du procédé pour transmettre des résultats et commandes au dispositif intelligent. Les commandes principales gérées par le dispositif sont la détermination de la consigne de température du chauffage et/ou de la climatisation, la modification de l'éclairage dans les différentes zones, la mise en veille de l'équipement informatique, l'activation ou la désactivation des appareils électriques. Un avantage d'une telle approche est de permettre la mise en œuvre du procédé de gestion d'énergie décrit précédemment avec un ajout minimum au niveau matériel (hardware) au sein du bâtiment, qui se limite à un dispositif intelligent de petite dimension, tel que cela est décrit ci-dessous, un ordinateur du bâtiment étant utilisé pour mettre en œuvre par un programme d'ordinateur une partie du procédé.

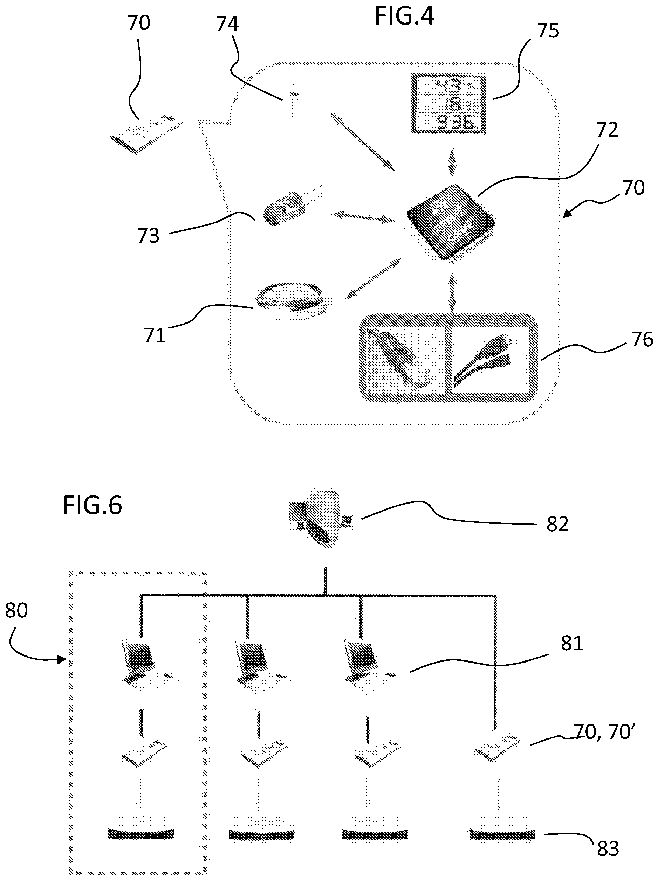

Selon un premier mode d'exécution, le dispositif intelligent se présente sous la forme d'une télécommande universelle, telle que repésentée sur la figure 4, qui communique par tout moyen sans contact, comme infrarouge, radio..., avec les différents systèmes du bâtiment. Pour cela, la télécommande 70 inclut un calculateur comme un microprocesseur 72, ou tout dispositif matériel et/ou logiciel (hardware et/ou software) apte à mettre en œuvre le procédé de l'invention. Elle fonctionne de manière autonome avec une batterie 71, comprend un émetteur infrarouge 73 pour ses communications infrarouge, comprend un capteur de température 74 et un afficheur 75. Elle est de plus reliée au réseau de communication 76 du bâtiment qui lui permet un accès avec un ordinateur central et des dispositifs à piloter comme le chauffage ou la climatisation.

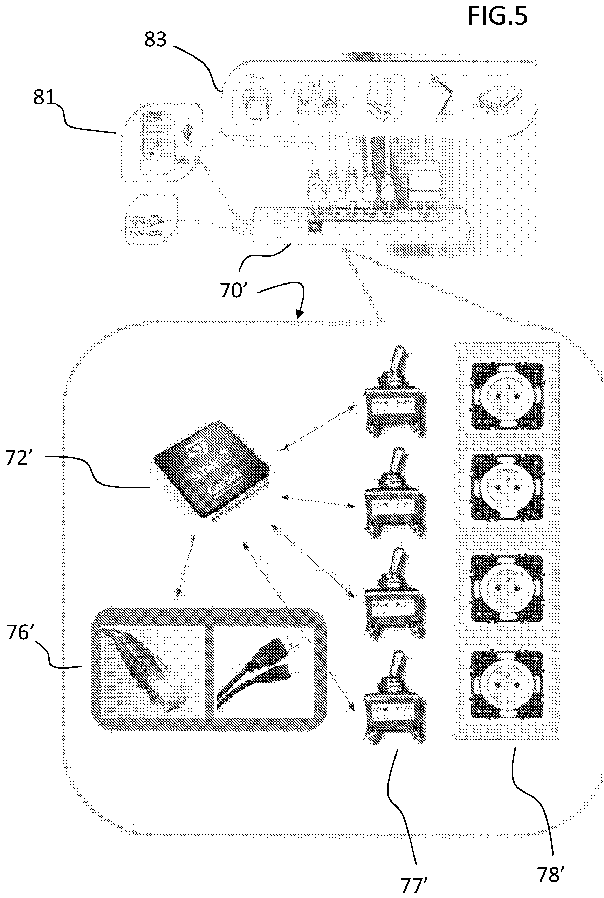

Selon un second mode d'exécution, le dispositif intelligent 70', illustré sur la figure 5, se présente sous la forme d'une prise électrique communicante, de type multiprises, qui peut intégrer des composants similaires à ceux présentés ci-dessus sous la forme de télécommande, comme un microprocesseur 72' et une connexion 76', ainsi que des switch 77' permettant d'activer ou désactiver les prises 78' sur lesquelles sont branchés différents équipements électriques du bâtiment, comme un ordinateur central 81, des imprimantes, écrans, lampes, etc, 83. Sous cette forme, le dispositif intelligent remplit la fonction supplémentaire de connexion ou non des différents dispositifs au réseau électrique. Cela permet de minimiser la consommation électrique du bâtiment, en déconnectant les appareils non nécessaires. Cela permet aussi d'éviter la mise en veille des équipements électriques et de réaliser des économies en consommation électrique. De plus, le dispositif intelligent 70' peut aussi détecter automatiquement les différents équipements qui lui sont connectés, par exemple en mesurant et différenciant la puissance consommée par chacun d'entre eux.

**EP 2 460 057 B1**

Selon une troisième réalisation envisagée, le dispositif intelligent peut consister en un onduleur communicant.

Dans tous les cas, le dispositif intelligent peut disposer d'une connexion de type ethernet, bluetooth, zigbee, USB, RS232, etc, pour sa connexion avec par exemple un ordinateur qui gère les données nécessaires au procédé de gestion décrit précédemment, partage la mise en œuvre de ce procédé avec le dispositif intelligent.

Le dispositif intelligent est de préférence autonome sur le plan énergétique, à l'aide d'une batterie, et apte à gérer le bâtiment même hors de toute liaison avec un ordinateur central, par exemple la nuit lorsque ce dernier est éteint, sur la base de données mémorisées, en attendant des données rafraîchies lors d'une nouvelle communication avec un tel ordinateur central. Cela permet de réduire la consommation énergétique globale du bâtiment, puisque le dispositif intelligent, de faible consommation, peut suffire à gérer le bâtiment durant certaines périodes. Il n'y a pas d'obligation de laisser fonctionner en permanence des dispositifs à forte consommation électrique.

Ainsi, le dispositif intelligent peut être relié au réseau électrique lorsqu'il est en contact avec un ordinateur central en fonctionnement, ce dernier planifiant les futures commandes d'énergie du bâtiment selon le procédé décrit précédemment et transmettant ces futures commandes, qui peuvent concerner une période de plusieurs jours, par exemple deux-trois jours, au dispositif intelligent qui pilote le bâtiment sur la base de ces commandes. Le dispositif est alors apte au pilotage du bâtiment de manière autonome sur une certaine période quand l'ordinateur est éteint, sur la base des commandes mémorisées. Lorsque l'ordinateur est de nouveau allumé, il reprend les calculs et peut mettre à jour les données de commande sur le dispositif intelligent.

Dans le cas d'un bâtiment comprenant plusieurs zones tel qu'illustré sur la figure 6, chaque zone 80 peut comprendre un ordinateur 81 et un dispositif intelligent 70, 70' pour le pilotage des systèmes énergétiques 83 de la zone comme le chauffage et la climatisation, de manière autonome. Selon une réalisation avantageuse, un serveur central 82 peut être relié à tous les ordinateurs 81 de chaque zone pour suivre et centraliser toutes les données de chaque zone.

Le concept de l'invention est adapté à tout bâtiment s'entendant au sens large, d'une simple caravane à un immeuble de grandes dimensions, pour une utilisation comme logement ou pour une utilisation industrielle.

**Revendications**

1. Procédé de gestion de l'énergie d'un bâtiment, comprenant un ou plusieurs occupants susceptibles d'y être présents, déterminant chacun un souhait de confort thermique pour une période donnée, ledit procédé comprenant une étape de détermination d'un paramètre de confort thermique global qui comprend la détermination d'une valeur de sensation thermique global Si (k) pour une période donnée k à partir du souhait de confort thermique de chaque occupant présent dans la zone du bâtiment à la période donnée, comprenant la réalisation de la moyenne des températures souhaitées par les différents occupants présents dans une zone i à un instant k, ce paramètre de confort thermique global étant utilisé pour gérer l'énergie en fonction des souhaits de confort des seuls occupants présents dans le bâtiment, et **caractérisé en ce que** l'étape de détermination du paramètre de confort thermique global comprend la détermination d'une valeur de sensation thermique global Si (k) pour une période donnée k, qui comprend la détermination pour chaque occupant potentiel j d'une température ambiante maximale ($T_{max}^j$ (k)) souhaitée, d'une température ambiante minimale ($T_{min}^j$ (k)) souhaitée et d'une température ambiante idéale ($T_{opt}^j$(k)) souhaitée pour chaque période k, **en ce qu'**il comprend un calcul d'une température ambiante maximale moyenne ($T_{max}^i$ (k)) souhaitée, d'une température ambiante minimale moyenne ($T_{min}^i$ (k)) souhaitée et d'une température ambiante idéale moyenne ($T_{opt}^i$ (k)) souhaitée pour chaque zone i du bâtiment et pour chaque période k selon les formules suivantes :

$$T_{max}^i(k) = \frac{\sum_{j=1}^{J} T_{max}^j(k) * o_{i,j,k}}{\sum_{j=1}^{J} o_{i,j,k}}$$

$$T_{min}^i(k) = \frac{\sum_{j=1}^{J} T_{min}^j(k) * o_{i,j,k}}{\sum_{j=1}^{J} o_{i,j,k}}$$

$$T_{opt}^i(k) = \frac{\sum_{j=1}^{J} T_{opt}^j(k) * o_{i,j,k}}{\sum_{j=1}^{J} o_{i,j,k}}$$

Où oi,j,k est un paramètre d'occupation individuel représentant l'information sur la présence ou non d'un individu j dans une zone i pour une période k,

et **en ce qu'**il comprend le calcul de la valeur de sensation thermique globale Si (k) pour chaque zone i du bâtiment et pour chaque période k par les formules suivantes :

$$S_i\,(k) = \frac{T_{opt}^i\,(k) - T_i\,(k)}{T_{opt}^i\,(k) - T_{min}^i\,(k)} \qquad si\ T_i\,(k) \leq T_{opt}^i\,(k)$$

Ou

$$S_i\,(k) = \frac{-T_{opt}^i\,(k) + T_i\,(k)}{-T_{opt}^i\,(k) + T_{max}^i\,(k)} \qquad si\ T_i\,(k) > T_{opt}^i\,(k)$$

et **caractérisé en ce que** la gestion de l'énergie d'une zone k du bâtiment comprend la minimisation de la somme suivante :

$$\sum_{i=1}^{I} \sum_{k=1}^{K} S_i\,(k)\ O_{i,k}$$

Oi,k étant un paramètre d'occupation global binaire représentant la présence ou non d'au moins un occupant dans une zone i du bâtiment pour une période donnée k, qui prend une valeur nulle en cas d'absence et égale à un dès qu'il y a au moins un occupant.

2. Procédé de gestion de l'énergie d'un bâtiment selon la revendication précédente, **caractérisé en ce qu'**il comprend une étape de détermination d'un paramètre d'occupation global binaire ($O_{i,k}$), représentant la présence ou non d'au moins un occupant dans une zone i du bâtiment pour une période donnée k, qui prend une valeur nulle en cas d'absence et égale à un dès qu'il y a au moins un occupant, et **en ce qu'**il prend en compte le produit du paramètre d'occupation global ($O_{i,k}$) par le paramètre de confort thermique global pour la gestion de l'énergie du bâtiment en fonction des souhaits de confort des seuls occupants présents dans la zone du bâtiment considérée pendant la période k.

3. Procédé de gestion de l'énergie d'un bâtiment selon la revendication 1 ou 2, **caractérisé en ce qu'**il comprend une étape d'estimation des températures $T_i$ (k) de chaque zone i du bâtiment pour chaque période (k) à partir d'un modèle de comportement thermique de chaque zone i du bâtiment, à partir de données météorologiques et à partir du chauffage ou de la climatisation de chaque zone i du bâtiment.

4. Procédé de gestion de l'énergie d'un bâtiment selon la revendication précédente, **caractérisé en ce que** le modèle de comportement thermique de chaque zone i du bâtiment permet de relier la température ($T_i$ (k+1)) d'une zone i pour une période k+1 à la température ($T_i$ (k)) de la zone i à la période précédente k, en fonction de constantes thermiques du bâtiment, de l'énergie ($P_m$(k)) fournie par un équipement lors de la période (k), de la température extérieure (Text (k)) à la période k, du radiant solaire ($\Phi s$ (k)) affectant la zone (i) pour la période (k), par l'équation suivante :

$$T_i\,(k+1) = A\ T_i\,(k) + B\ P_m(k) + C1\ Text\,(k) + C2\ \Phi s\,(k)$$

où A, B, C1, et C2 sont des matrices caractérisant le comportement thermique du bâtiment.

5. Procédé de gestion de l'énergie d'un bâtiment selon l'une des revendications précédentes, **caractérisé en ce qu'**il considère l'énergie produite ($E_q$ (k)) pour une période k par une source d'énergie q parmi les Q différentes sources d'énergie possibles, reliées au bâtiment, et le fonctionnement d'un équipement m consommant de l'énergie ($P_m$ (k)) pour la période k parmi les M équipements présents dans le bâtiment, et **en ce qu'**il recherche l'optimisation de la consommation énergétique du bâtiment par la minimisation de la somme

$$\sum_{q=1}^{Q} \sum_{k=1}^{K} \text{Cost}_q \, (k) \, E_q \, (k)$$

où $\text{Cost}_q \, (k)$ représente le coût d'une unité d'énergie produite par une source q dans la période k ;
et **en ce qu'**il vérifie le bilan énergétique suivant :

$$\sum_{m=1}^{M} P_m \, (k) = \sum_{q=1}^{Q} E_q \, (k)$$

6. Procédé de gestion de l'énergie d'un bâtiment selon la revendication précédente, **caractérisé en ce qu'**il prend en compte un maximum ($E_q^{max} \, (k)$) de l'énergie produite par une source q pendant une période k et un maximum ($P_m^{max} \, (k)$) de l'énergie injectée par l'équipement m pendant la période k, par la vérification des conditions suivantes :

$$P_m(k) \leq P_m^{max} \, (k) \; \forall \, m \in [1, M], k \in [1, K]$$

et

$$E_q(k) \leq E_q^{max} \, (k) \; \forall \, q \in [1, Q], k \in [1, K]$$

7. Procédé de gestion de l'énergie d'un bâtiment selon l'une des revendications 5 ou 6, **caractérisé en ce qu'**il considère la minimisation du rejet en $CO_{2q} \, (k)$ par une source de production d'énergie q pendant une période k, par la minimisation de la somme

$$\sum_{q=1}^{Q} \sum_{k=1}^{K} CO_{2q} \, (k) \, E_q \, (k)$$

8. Dispositif de gestion de l'énergie d'un bâtiment comprenant un ou plusieurs occupants susceptibles d'y être présents déterminant chacun un souhait de confort pour une période donnée comprenant des équipements consommant de l'énergie, **caractérisé en ce qu'**il comprend un moyen mettant en œuvre un procédé de gestion de l'énergie du bâtiment selon l'une des revendications précédentes.

9. Dispositif de gestion de l'énergie d'un bâtiment selon la revendication précédente, **caractérisé en ce que** le moyen mettant en œuvre le procédé de gestion de l'énergie du bâtiment comprend d'une part un calculateur de type ordinateur, qui effectue les calculs complexes du procédé, et d'autre part un dispositif intelligent (70, 70'), relié au calculateur par un moyen de communication, qui reçoit des résultats du calculateur et transmet des commandes de pilotage à au moins un équipement de consommation d'énergie à l'intérieur du bâtiment.

10. Dispositif de gestion de l'énergie d'un bâtiment selon la revendication précédente, **caractérisé en ce que** le dispositif intelligent (70, 70') se présente sous la forme d'une télécommande, ou sous la forme d'une prise communicante ou d'un onduleur communicant.

11. Dispositif de gestion de l'énergie d'un bâtiment selon l'une des revendications 8 à 10, **caractérisé en ce que** le moyen mettant en œuvre le procédé de gestion de l'énergie du bâtiment est relié à un ou plusieurs agendas électroniques d'un ou plusieurs occupants potentiels, d'un ou plusieurs groupes d'occupants et/ou d'une ou plusieurs zones du bâtiment, et/ou d'au moins un capteur de présence, de sorte de pouvoir en déduire le paramètre d'occupation global du bâtiment.

12. Bâtiment, **caractérisé en ce qu'**il comprend un dispositif de gestion de son énergie qui met en œuvre un procédé de gestion selon l'une des revendications 1 à 7.

13. Bâtiment selon la revendication précédente, **caractérisé en ce qu'**il comprend plusieurs zones (80) qui comprennent chacune un dispositif de gestion de son énergie, indépendant ou relié par un serveur central (82).

**Patentansprüche**

1. Verfahren zur Verwaltung der Energie eines Gebäudes, das einen oder mehrere Bewohner umfasst, die darin anwesend sein können und die jeweils einen Wunsch nach Wärmekomfort für einen gegebenen Zeitraum bestimmen, wobei das Verfahren einen Schritt der Bestimmung eines globalen Parameters des Wärmekomforts umfasst, welcher die Bestimmung eines globalen Wertes der Temperaturempfindung Si (k) für einen gegebenen Zeitraum k anhand des Wunsches nach Wärmekomfort jedes Bewohners, der in dem Bereich des Gebäude in dem gegebenen Zeitraum anwesend ist, umfasst, welche die Bildung des Mittelwertes der Temperaturen umfasst, die von den verschiedenen Bewohnern, die in einem Bereich i zu einem Zeitpunkt k anwesend sind, gewünscht werden, wobei dieser globale Parameter des Wärmekomforts verwendet wird, um die Energie in Abhängigkeit von den Komfortwünschen nur der in dem Gebäude anwesenden Bewohner zu verwalten, und **dadurch gekennzeichnet, dass** der Schritt der Bestimmung des globalen Parameters des Wärmekomforts die Bestimmung eines globalen Wertes der Temperaturempfindung Si (k) für einen gegebenen Zeitraum k umfasst, welcher die Bestimmung, für jeden potentiellen Bewohner j, einer gewünschten maximalen Umgebungstemperatur $T_{max}^{j}$ (k), einer gewünschten minimalen Umgebungstemperatur $T_{min}^{j}$ (k) und einer gewünschten idealen Umgebungstemperatur $T_{opt}^{j}$ (k) für jeden Zeitraum k umfasst, dadurch, dass es eine Berechnung einer gewünschten mittleren maximalen Umgebungstemperatur $T_{max}^{i}$ (k), einer gewünschten mittleren minimalen Umgebungstemperatur $T_{min}^{i}$ (k) und einer gewünschten mittleren idealen Umgebungstemperatur $T_{opt}^{i}$ (k) für jeden Bereich i des Gebäudes und für jeden Zeitraum k gemäß den folgenden Formeln umfasst:

$$T_{max}^{i}(k) = \frac{\sum_{j=1}^{J} T_{max}^{j}(k) * O_{i,j,k}}{\sum_{j=1}^{J} O_{i,j,k}}$$

$$T_{min}^{i}(k) = \frac{\sum_{j=1}^{J} T_{min}^{j}(k) * O_{i,j,k}}{\sum_{j=1}^{J} O_{i,j,k}}$$

$$T_{opt}^{i}(k) = \frac{\sum_{j=1}^{J} T_{opt}^{j}(k) * O_{i,j,k}}{\sum_{j=1}^{J} O_{i,j,k}}$$

wobei $o_{i,j,k}$ ein individueller Belegungsparameter ist, der die Information über die Anwesenheit oder Nichtanwesenheit eines Individuums j in einem Bereich i für einen Zeitraum k repräsentiert,
und dadurch, dass es die Berechnung des globalen Wertes der Temperaturempfindung Si (k) für jeden Bereich i des Gebäudes und für jeden Zeitraum k nach den folgenden Formeln umfasst:

$$Si\ (k) = \frac{T_{opt}^{i}(k) - T_{i}(k)}{T_{opt}^{i}(k) - T_{min}^{i}(k)}, \ \texttt{falls}\ \texttt{T}_\texttt{i}(\texttt{k})\ \leq\ \texttt{T}_{\texttt{opt}}{}^{\texttt{i}}\ (\texttt{k}),$$

oder

$$Si\ (k) = \frac{-T_{opt}^{i}(k) + T_{i}(k)}{-T_{opt}^{i}(k) + T_{max}^{i}(k)}, \ \texttt{falls}\ \texttt{T}_\texttt{i}(\texttt{k})\ >\ \texttt{T}_{\texttt{opt}}{}^{\texttt{i}}\ (\texttt{k}),$$

und **dadurch gekennzeichnet, dass** die Verwaltung der Energie eines Bereichs k des Gebäudes die Minimierung der folgenden Summe umfasst:

$$\sum\nolimits_{i=1}^{I} \sum\nolimits_{k=1}^{K} \mathrm{Si}\,(k)\,\mathrm{O}_{i,k}\ ,$$

wobei Oi,k ein binärer globaler Belegungsparameter ist, der die Anwesenheit oder Nichtanwesenheit wenigstens eines Bewohners in einem Bereich i des Gebäudes für einen gegebenen Zeitraum k repräsentiert und der einen Wert null im Falle der Abwesenheit annimmt und gleich eins ist, sobald wenigstens ein Bewohner anwesend ist.

2. Verfahren zur Verwaltung der Energie eines Gebäudes nach dem vorhergehenden Anspruch, **dadurch gekennzeichnet, dass** es einen Schritt der Bestimmung eines binären globalen Belegungsparameters ($O_{i,k}$) umfasst, der die Anwesenheit oder Nichtanwesenheit wenigstens eines Bewohners in einem Bereich i des Gebäudes für einen gegebenen Zeitraum k repräsentiert und der einen Wert null im Falle der Abwesenheit annimmt und gleich eins ist, sobald wenigstens ein Bewohner anwesend ist, und dadurch, dass es das Produkt des globalen Belegungsparameters ($O_{i,k}$) mit dem globalen Parameter des Wärmekomforts für die Verwaltung der Energie des Gebäudes in Abhängigkeit von den Komfortwünschen nur der Bewohner berücksichtigt, die in dem betrachteten Bereich des Gebäudes während des Zeitraums k anwesend sind.

3. Verfahren zur Verwaltung der Energie eines Gebäudes nach Anspruch 1 oder 2, **dadurch gekennzeichnet, dass** es einen Schritt der Schätzung der Temperaturen $T_i\,(k)$ jedes Bereichs i des Gebäudes für jeden Zeitraum (k) anhand eines Modells des thermischen Verhaltens jedes Bereichs i des Gebäudes, anhand von meteorologischen Daten und anhand der Heizung oder der Klimatisierung jedes Bereichs i des Gebäudes umfasst.

4. Verfahren zur Verwaltung der Energie eines Gebäudes nach dem vorhergehenden Anspruch, **dadurch gekennzeichnet, dass** das Modell des thermischen Verhaltens jedes Bereichs i des Gebäudes ermöglicht, die Temperatur ($T_i\,(k+1)$) eines Bereichs i für einen Zeitraum k+1 mit der Temperatur ($T_i\,(k)$) des Bereichs i im vorhergehenden Zeitraum k in Abhängigkeit von thermischen Konstanten des Gebäudes, von der Energie ($P_m(k)$), die von einer Einrichtung während des Zeitraums (k) geliefert wird, von der Außentemperatur (Text (k)) im Zeitraum k und von der Sonneneinstrahlung ($\Phi_s\,(k)$), die den Bereich (i) für den Zeitraum (k) beeinflusst, durch die folgende Gleichung zu verknüpfen:

```
Ti (k+1)
   = A Ti (k) + B Pm(k) + C1 Text (k) + C2 Φs (k),
```

wobei A, B, C1 und C2 Matrizen sind, die das thermische Verhalten des Gebäudes charakterisieren.

5. Verfahren zur Verwaltung der Energie eines Gebäudes nach einem der vorhergehenden Ansprüche, **dadurch gekennzeichnet, dass** es die Energie ($E_q\,(k)$), die für einen Zeitraum k von einer Energiequelle q von den Q verschiedenen möglichen Energiequellen, die mit dem Gebäude verbunden sind, erzeugt wird, und den Betrieb einer Einrichtung m von den M im Gebäude vorhandenen Einrichtungen, die für den Zeitraum k Energie ($P_m(k)$) verbraucht, berücksichtigt, und dadurch, dass es die Optimierung des Energieverbrauchs des Gebäudes durch die Minimierung der Summe

$$\sum\nolimits_{q=1}^{Q} \sum\nolimits_{k=1}^{K} \mathrm{Cost}_q\,(k)\,\mathrm{E}_q\,(k)$$

anstrebt, wobei $\mathrm{Cost}_q\,(k)$ die Kosten einer Energieeinheit repräsentiert, die von einer Quelle q im Zeitraum k erzeugt wird;
und dadurch, dass es die folgende Energiebilanz überprüft:

$$\sum_{m=1}^{M} P_m(k) = \sum_{q=1}^{Q} E_q(k)\ .$$

6. Verfahren zur Verwaltung der Energie eines Gebäudes nach dem vorhergehenden Anspruch, **dadurch gekennzeichnet, dass** es ein Maximum ($E_q^{max}\,(k)$) der Energie, die von einer Quelle q während eines Zeitraums k erzeugt wird, und ein Maximum ($P_m^{max}\,(k)$) der Energie, die von der Einrichtung m während des Zeitraums k eingespeist wird, durch die Überprüfung der folgenden Bedingungen berücksichtigt:

$$P_m(k) \leq P_m^{max}(k) \quad \forall\ m \in [1, M],\ k \in [1, K]$$

und

$$E_q(k) \leq E_q^{max}(k) \quad \forall\ q \in [1, Q],\ k \in [1, K].$$

**7.** Verfahren zur Verwaltung der Energie eines Gebäudes nach einem der Ansprüche 5 oder 6, **dadurch gekennzeichnet, dass** es die Minimierung des Ausstoßes von $CO_{2q}(k)$ durch eine Quelle der Energieerzeugung q während eines Zeitraums k durch die Minimierung der Summe

$$\sum_{q=1}^{Q} \sum_{k=1}^{K} CO_{2q}(k)\, E_q(k)$$

berücksichtigt.

**8.** Vorrichtung zur Verwaltung der Energie eines Gebäudes, das einen oder mehrere Bewohner umfasst, die darin anwesend sein können und die jeweils einen Komfortwunsch für einen gegebenen Zeitraum bestimmen, und das Einrichtungen umfasst, die Energie verbrauchen, **dadurch gekennzeichnet, dass** sie ein Mittel umfasst, welches ein Verfahren zur Verwaltung der Energie des Gebäudes nach einem der vorhergehenden Ansprüche durchführt.

**9.** Vorrichtung zur Verwaltung der Energie eines Gebäudes nach dem vorhergehenden Anspruch, **dadurch gekennzeichnet, dass** das Mittel, welches das Verfahren zur Verwaltung der Energie des Gebäudes durchführt, einerseits einen Rechner vom Typ eines Computers umfasst, welcher die komplexen Berechnungen des Verfahrens ausführt, und andererseits eine mit dem Rechner durch ein Kommunikationsmittel verbundene intelligente Vorrichtung (70, 70'), welche Ergebnisse des Rechners empfängt und Steuerbefehle an wenigstens eine Energie verbrauchende Einrichtung im Inneren des Gebäudes überträgt.

**10.** Vorrichtung zur Verwaltung der Energie eines Gebäudes nach dem vorhergehenden Anspruch, **dadurch gekennzeichnet, dass** die intelligente Vorrichtung (70, 70') die Form einer Fernbedienung hat, oder die Form eines Smart Plugs oder Smart Inverters.

**11.** Vorrichtung zur Verwaltung der Energie eines Gebäudes nach einem der Ansprüche 8 bis 10, **dadurch gekennzeichnet, dass** das Mittel, welches das Verfahren zur Verwaltung der Energie des Gebäudes durchführt, mit einem oder mehreren elektronischen Terminkalendern eines oder mehrerer potentieller Bewohner, einer oder mehrerer Gruppen von Bewohnern und/oder eines oder mehrerer Bereiche des Gebäudes und/oder wenigstens eines Anwesenheitssensors verbunden ist, um daraus den globalen Belegungsparameter des Gebäudes abzuleiten.

**12.** Gebäude, **dadurch gekennzeichnet, dass** es eine Vorrichtung zur Verwaltung seiner Energie umfasst, welches ein Verfahren zur Verwaltung nach einem der Ansprüche 1 bis 7 durchführt.

**13.** Gebäude nach dem vorhergehenden Anspruch, **dadurch gekennzeichnet, dass** es mehrere Bereiche (80) umfasst, welche jeweils eine Vorrichtung zur Verwaltung ihrer Energie umfassen, die unabhängig oder über einen zentralen Server (82) verbunden ist.

**Claims**

**1.** Method for managing the energy of a building, comprising one or more occupants likely to be present therein, each determining a thermal comfort desire for a given period, said method comprising a step for determining an overall thermal comfort parameter which comprises the determination of an overall thermal sensation value Si (k) for a given period k on the basis of the thermal comfort desire of each occupant present in the area of the building in the given period, comprising performing the average of the temperatures desired by the different individuals present in an area i at an instant k, this global thermal comfort parameter being used to manage the energy on the basis of the comfort desires of the only occupants present in the building, and **characterized in that** the step for determining the global thermal comfort parameter comprises the determination of an overall thermal sensation value Si (k) for a given period k, which comprises the determination for each potential occupant j of a desired maximum ambient temperature ($T_{max}^j$ (k)), of a desired minimum ambient temperature ($T_{min}^j$ (k)) and of a desired ideal ambient temperature ($T_{opt}^j$ (k)) for each period k, and **in that** it comprises a calculation of a desired average maximum ambient temperature ($T_{max}^i$ (k)), of a desired average minimum ambient temperature ($T_{min}^i$ (k)) and of a desired average ideal ambient temperature ($T_{opt}^i$ (k)) for each area i of the building and for each period k according to the following equations:

$$T_{max}^i(k) = \frac{\sum_{j=1}^{J} T_{max}^j(k) * o_{i,j,k}}{\sum_{j=1}^{J} o_{i,j,k}}$$

$$T_{min}^i(k) = \frac{\sum_{j=1}^{J} T_{min}^j(k) * o_{i,j,k}}{\sum_{j=1}^{J} o_{i,j,k}}$$

$$T_{opt}^i(k) = \frac{\sum_{j=1}^{J} T_{opt}^j(k) * o_{i,j,k}}{\sum_{j=1}^{J} o_{i,j,k}}$$

Where $o_{i,j,k}$ is an individual occupancy parameter representing the information concerning the presence or not of an individual j in an area i for a period k,
and **in that** it comprises the calculation of the global thermal sensation value $S_i$ (k) for each area i of the building and for each period k by the following equations:

$$S_i(k) = \frac{T_{opt}^i(k) - Ti(k)}{T_{opt}^i(k) - T_{min}^i(k)} \qquad \text{if } T_i(k) \leq T_{opt}^i(k)$$

or

$$S_i(k) = \frac{-T_{opt}^i(k) + Ti(k)}{-T_{opt}^i(k) + T_{max}^i(k)} \qquad \text{if } T_i(k) > T_{opt}^i(k)$$

and **characterized in that** the management of the energy of an area k of the building comprises the minimization of the following sum:

$$\sum_{i=1}^{I} \sum_{k=1}^{K} Si(k) \, O_{i,k} \qquad .$$

Oi,k being a binary global occupancy parameter representing the presence or not of at least one occupant in an area i of the building for a given period k, which takes a zero value in the case of absence and is equal to one when there is at least one occupant.

2. Method for managing the energy of a building according to the preceding claim, **characterized in that** it comprises a step for determining a binary global occupancy parameter ($O_{i,k}$), representing the presence or absence of at least one occupant in an area i of the building for a given period k, which takes a zero value in the case of absence and is equal to one when there is at least one occupant, and **in that** it takes into account the product of the global occupancy parameter ($O_{i,k}$) by the global thermal comfort parameter for the management of the energy of the building on the basis of the comfort desires of the only occupants present in the area of the building concerned during the period k.

3. Method for managing the energy of a building according to claim 1 or 2, **characterized in that** it comprises a step for estimating the temperatures $T_i$ (k) of each area i of the building for each period k on the basis of a thermal behaviour model of each area i of the building, on the basis of weather data and on the basis of the heating or the air conditioning of each area i of the building.

4. Method for managing the energy of a building according to the preceding claim, **characterized in that** the thermal behaviour model of each area i of the building makes it possible to link the temperature ($T_i$ (k+1)) of an area i for a period k+1 to the temperature ($T_i$ (k)) of the area i in the preceding period k, according to a thermal constant of the building, of the energy ($P_m$ (k)) supplied by an appliance during the period (k), of the outdoor temperature (Text (k)) in the period k, of the solar radiant ($\Phi s$ (k)) affecting the area (i) for the period (k), by the following equation:

$$T_i \ (k+1) \ = \ A \ T_i \ (k) \ + \ B \ P_m(k) \ + \ C1 \ Text \ (k) \ + \ C2 \ \Phi s(k)$$

in which A, B, C1 and C2 are matrices characterizing the thermal behaviour of the building.

5. Method for managing the energy of a building according to one of the preceding claims, **characterized in that** it considers the energy produced ($E_q$ (k)) for a period k by one energy source q out of the Q possible different energy sources, linked to the building, and the operation of one appliance m consuming energy ($P_m$ (k)) for the period k out of the M appliances present in the building, and **in that** it seeks to optimize the energy consumption of the building by minimizing the sum

$$\sum_{q=1}^{Q} \sum_{k=1}^{K} \text{Cost}_q \ (k) \ E_q \ (k)$$

in which $\text{Cost}_q$ (k) represents the cost of an energy unit produced by a source q in the period k;
and **in that** it checks the following energy balance:

$$\sum_{m=1}^{M} P_m \ (k) = \sum_{q=1}^{Q} E_q \ (k)$$

6. Method for managing the energy of a building according to the preceding claim, **characterized in that** it takes into account a maximum ($E_q^{max}$ (k)) of the energy produced by a source q during a period k and a maximum ($P_m^{max}$ (k)) of the energy injected by the appliance m during the period k, by checking the following conditions:

$$P_m(k) \ \leq \ P_m^{max} \ (k) \ \forall \ m \in \ [1, \ M], \ k \in \ [1, \ K]$$

and

$$E_q(k) \ \leq \ E_q^{max} \ (k) \ \forall \ q \in \ [1, \ Q], \ k \in \ [1, \ K]$$

7. Method for managing the energy of a building according to one of Claims 5 or 6, **characterized in that** it considers the minimization of the $CO_{2q}$ emissions (k) by a source of energy production q during a period k, by minimizing the sum

$$\sum_{q=1}^{Q} \sum_{k=1}^{K} CO_{2q} \ (k) \ E_q \ (k)$$

8. Device for managing the energy of a building, comprising one or more occupants likely to be present therein, each determining a comfort desire for a given period, comprising appliances consuming energy, **characterized in that** it comprises a means implementing a method for managing the energy of a building according to one of the preceding claims.

9. Device for managing the energy of a building according to the preceding claim, **characterized in that** the means implementing the method for managing the energy of the building comprises on the one hand a calculator of computer type, which performs the complex calculations of the method, and on the other hand a smart device (70, 70'), linked to the computer by a communication means, which receives results from the computer and transmits control commands to at least one energy consuming appliance inside the building.

10. Device for managing the energy of a building according to the preceding claim, **characterized in that** the smart device (70, 70') takes the form of a remote control, or the form of a communicating outlet or of a communicating inverter.

11. Device for managing the energy of a building according to one of Claims 8 to 10, **characterized in that** the means implementing the method for managing the energy of the building is linked to one or more electronic diaries of one or more potential occupants, or one or more groups of occupants, and/or of one or more areas of the building, and/or to at least one presence sensor, so as to be able to deduce therefrom the global occupancy parameter of the building.

12. Building, **characterized in that** it comprises a device for managing its energy which implements a management method according to one of Claims 1 to 7.

13. Building according to the preceding claim, **characterized in that** it comprises a number of areas (80) each of which comprises a device for managing its energy, independent or linked by a central server (82).

FIG.1

10

12

13

14

$11_1$

$11_2$

$11_J$

20

24

25

$T_{opt}^i (k)$

41

31

$O_{i,k}$

$E_q$
$P_m$

30

35

$T_i$

50

45

42

40

FIG.2

31

Zone i

$r_i, C_i$

$T_a$

$\phi_s$

$\phi_r$

$T_{ext}$

$T_m$

FIG.3

61

62

63

64

FIG.4

FIG.6

FIG.5

**EP 2 460 057 B1**

## RÉFÉRENCES CITÉES DANS LA DESCRIPTION

**Documents brevets cités dans la description**

- US 20080177423 A

- US 6754504 B1